(19) **Europäisches Patentamt / European Patent Office / Office européen des brevets**

(11) **EP 1 608 872 B1**

(12) **EUROPÄISCHE PATENTSCHRIFT**

(45) Veröffentlichungstag und Bekanntmachung des Hinweises auf die Patenterteilung:
**27.10.2010 Patentblatt 2010/43**

(21) Anmeldenummer: **04723212.9**

(22) Anmeldetag: **25.03.2004**

(51) Int Cl.:
*F03D 7/04* *(2006.01)*      *F16H 47/08* *(2006.01)*

(86) Internationale Anmeldenummer:
**PCT/EP2004/003143**

(87) Internationale Veröffentlichungsnummer:
**WO 2004/088132 (14.10.2004 Gazette 2004/42)**

(54) **ANTRIEBSSTRANG ZUM ÜBERTRAGEN EINER VARIABLEN LEISTUNG**

DRIVE TRAIN FOR THE TRANSMISSION OF A VARIABLE POWER

CHAINE CINEMATIQUE POUR TRANSMETTRE UNE PUISSANCE VARIABLE

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.03.2003 DE 10314757**

(43) Veröffentlichungstag der Anmeldung:
**28.12.2005 Patentblatt 2005/52**

(73) Patentinhaber: **Voith Turbo GmbH**
**89522 Heidenheim (DE)**

(72) Erfinder: **BASTECK, Andreas**
**79540 Lörrach (DE)**

(74) Vertreter: **Weitzel, Wolfgang**
**Dr. Weitzel & Partner**
**Patent- und Rechtsanwälte**
**Friedenstrasse 10**
**89522 Heidenheim (DE)**

(56) Entgegenhaltungen:

| | |
|---|---|
| **EP-A- 0 120 654** | **EP-A- 0 635 639** |
| **WO-A-81/01444** | **DE-C- 812 660** |
| **US-A- 4 239 977** | **US-A- 4 586 400** |

EP 1 608 872 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft einen Antriebsstrang zum Übertragen einer variablen Leistung mit variabler Eingangsdrehzahl und konstanter Ausgangsdrehzahl. Die Erfindung betrifft insbesondere Anlagen mit variabler Leistungseinbringung, wie sie bei Nutzung von natürlichen Energieaufkommen von Wind, Wasser und anderen Ressourcen aufkommen.

WO-A-81/01444 beschreibt einen Antriebsstrang gemäß dem Oberbegriff von Anspruch 1. Dieser umfasst eine Energieerzeugungsanlage, ein Leistungsverzweigungsgetriebe und einen elektrischen Generator. Dabei wird mittels eines hydraulischen Kreislaufes eine Verbindung zwischen den beiden Leistungszweigen hergestellt und der Leistungsfluss derart beeinflusst, dass die Eingangsdrehzahl des Generators konstant ist. Ein weiterer nach diesem Prinzip gestalteter Antriebstrang ergibt sich außerdem aus der EP 0 120 654 A1.

Die Nutzung der Windenergie wird vor allem bei Leistungen von über 1 MW interessant. Ferner ist es notwendig, die Betriebsführung der Anlage derart zu gestalten, dass eine maximale Leistungsausbeute bei minimaler dynamischer Belastung erfolgt. Um den Wirkungsgrad des gesamten Systems optimal zu gestalten, und zwar in der Phase des Hochfahrens der Anlage sowie in der Betriebsphase und beim Stillsetzen, benötigt man eine Drehzahlregelung für die Arbeitsmaschine, die auch bereichsweise durch weitere Regelungsarten (z. B. Rotorblattverstellung) unterstützt werden kann.

Im Folgenden soll daher anhand des Beispiels von Windkraftanlagen die Problematik einer zeitlich variablen Leistungsübertragung insbesondere bei einer zeitlich veränderlicher Eingangsdrehzahl und entsprechend zeitlich veränderlichem Moment dargestellt werden, wenn als Nebenbedingung bei der Leistungsübertragung eine im Wesentlichen zeitlich konstante Ausgangsdrehzahl gefordert ist.

Der Betrieb einer Windkraftanlage ist deshalb für die voranstehend dargestellte Problematik kennzeichnend, da die durch die Windkraftanlage erzeugte elektrische Energie in ein elektrisches Verbundnetz eingespeist wird, welches eine starre Netzfrequenz aufweist. Da es sich bei der Netzfrequenz um die primäre Größe zur Stabilisierung und Regelung des Netzes selbst handelt, setzt eine direkte Kopplung des Generators der Windkraftanlage voraus, dass dieser vom Antriebsstrang mit einer konstanten Drehzahl versorgt wird. Solche Windkraftanlagen werden auch als drehzahlstarre Windkraftanlagen bezeichnet.

Dabei werden für drehzahlstarre Windkraftanlagen üblicherweise Asynchrongeneratoren verwendet, die aufgrund des prinzipbedingten Schlupfes auf einfache Art und Weise auf ein Verbundnetz aufgeschaltet werden können.

Zur Systemanforderung einer konstanten Ausgangsdrehzahl am Antriebsstrang kontrastierend ist der aufgrund schwankender Windverhältnisse zeitlich variable Leistungseintrag bei Windkraftanlagen. Dabei wird diese Problematik zusätzlich durch die systeminhärente Charakteristik der mechanischen Energiewandlung der kinetischen Energie der Luftströmung in die kinetische Energie der Rotorbewegung verschärft. Bei einer drehzahlstarren Windkraftanlage liegt eine Festlegung auf eine bestimmte Rotorfrequenz oder auf wenige Rotorfrequenzen vor, wobei mehr als eine Rotorfrequenz nur dann möglich ist, falls der Generator eine Polumschaltung besitzt oder unterschiedliche Generatoren verwendet werden. Dabei wird die gewünschte Umlaufgeschwindigkeit des Rotors üblicherweise durch eine Winkelverstellung der Rotorblätter erreicht, was auch als Pitchregelung bezeichnet wird.

Nachteilig an drehzahlstarren Windkraftanlagen ist, dass sie bei Teillast, welche bei typischen Windverhältnissen häufig auftritt, nur mit verminderter Effizienz betrieben werden können.

Wird eine Windkraftanlage im Teillastbereich drehzahlvariabel betrieben, so besteht entweder die Möglichkeit, einen Antriebsstrang mit variabler oder konstanter Ausgangsdrehzahl auszubilden. Dabei ist in beiden Fällen die Ausgangsleistung aufgrund des zeitlich variierenden Momentes ebenfalls zeitlich veränderlich.

Der erste Fall führt für Windkraftanlagen zur Verwendung von Frequenzumrichtern mit einem Gleichstromzwischenkreis. Dieser Ansatz leitet aber weg von der hier dargestellten Aufgabe und ist insbesondere mit weiteren Schwierigkeiten behaftet, wie einer starken Netzrückwirkung in Verbindung mit einer erhöhten Oberschwingungsbelastung und hohen Blindleistungen.

Der zweite Ansatz, nämlich eine variable Rotordrehzahl der Windkraftanlage mit einer konstanten Generatordrehzahl zu verbinden, entspricht der hier dargestellten Thematik eines Antriebsstrangs zum Übertragen einer variablen Leistung mit einer variablen Eingangsdrehzahl und konstanter Ausgangsdrehzahl. Die bekannten Lösungen dieser Problematik, insbesondere für Windkraftanlagen, setzen im Antriebsstrang ein Überlagerungsgetriebe ein, welches zur Verzweigung bzw. Überlagerung der mechanischen Leistung verwendet wird. Bei drehzahlvariablen Windkraftanlagen sind nun zwei hierauf basierende Ansätze bekannt geworden, welche zur Konstanthaltung der Generatorfrequenz verwendet werden.

Im ersten System wird die Eingangsleistung über das Überlagerungsgetriebe auf einen großen Generator sowie einen kleinen Stellmotor aufgeteilt, wobei üblicherweise auf den Stellmotor in etwa 30 % der Eingangsleistung übertragen wird. Der Generator ist frequenzstarr mit dem Stromnetz verbunden, während der Stellmotor über einen Frequenzumrichter am Netz angeschlossen ist. Zur Stabilisierung der Generatordrehzahl wird der Stellmotor entweder als Motor oder als Generator betrieben. Auch dieses System ist nicht rückwirkungsfrei für das Stromnetz. Ferner ist ein solches System nur schwierig zu regeln und weist als Energiespeicher im Wesentlichen nur die trägen Massen des Antriebsstrangs und des Rotors auf. Des Weiteren sind aufgrund des Einsatzes von Frequenzumrichtern die Investitionskosten relativ hoch.

Im zweiten System, welches hydrostatisch arbeitet, werden anstatt des elektrischen Stellmotors hydraulische Motoren und Pumpen verwendet. Auch hier tritt die Problematik einer schwierigen Regelungscharakteristik auf, insbesondere ein träges Ansprechverhalten und relevante Todzeiten sowie starke Nichtlinearitäten. Außerdem sind die hydraulischen Systemkomponenten aufgrund des konstruktiven Aufwands und des Gewichts nachteilig.

In der nachfolgenden Tabelle werden die dargestellten unterschiedlichen bekannten Regelungen der Wirkleistung von Windkraftanlagen zusammengefasst:

| | Generator mit Umrichter | Generator mit Umrichter und Getriebe mit Festübersetzung | | | Generator mit Überlagerungsgetriebe | |
|---|---|---|---|---|---|---|
| Systemtyp | elektronisch | einstufiges Getriebe | Getriebe | Getriebe | mit E-Motor | mit Hydrostatik |
| Generator | permanent erregter Synchron-generator | Synchron-generator | 4/6 Pol Asynchron- bzw. Synchron-generator | 4/6 Pol doppelt gespeister Asynchron-generator | 4/6 Pol Asynchron- bzw. Synchron-generator | 4/6 Pol Asynchron- bzw. Synchron-generator |
| Umrichter | PWM - VSI | PWM - VSI | PWM - VSI | PWM - VSI | - | - |
| Getriebe | - | Planetenstufe | Planetenstufe + Stirnradstufe | Planetenstufe + Stirnradstufe | Planetenstufe + Getriebestufe mit Überlagerung | Planetenstufe + Getriebestufe mit Überlagerung |
| Regelung | Rotorblätter, Drehzahl | Rotorblätter, Drehzahl | Rotorblätter, Schlupf Polumschaltung | Drosselung der Drehzahl | Rotorblätter, Drehzahl | Rotorblätter, Drehzahl |

Der Erfindung liegt die Aufgabe zugrunde, einen Antriebsstrang zum Übertragen einer variablen Leistung derart zu gestalten, dass ein Leistungsaufnehmer mit einer im Wesentlichen konstanten Drehzahl beschickt werden kann, so dass der Übertragungsvorgang bei hohem Wirkungsgrad vonstatten geht und Stöße im Antriebsstrang minimiert werden. Ferner ist ein Kurzzeitenergiespeicher im Antriebsstrang auszubilden, um die Regelungscharakteristik des Systems zu verbessern. Außerdem sind die Anzahl der beteiligten Bauteile und die Investitionskosten auf niedrigem Niveau zu halten.

Diese Aufgabe wird durch die Merkmale von Anspruch 1 gelöst.

Das erfindungsgemäße Prinzip führt zu einem sehr guten Wirkungsgrad. Bei Windkraftanlagen führt der erfindungsgemäße Antriebsstrang auch bei unregelmäßigem Windprofil und damit verbunden unterschiedlichen Rotordrehzahlen zu einer Generatordrehzahl auf einem annähernd gleichmäßigen Niveau.

Bisher sind in Windkraftanlagen verschiedene Regelungs- und Steuermöglichkeiten mit mehr und minder gutem Einfluss auf den Wirkungsgrad bekannt:

- Einstellung des Rotorblattwinkels,
- variable Drehzahl des Generators,
- Schlupfregelung,
- Drosselung der Drehzahl des Generators,
- Polzahlschaltung und
- Drehzahlregelung im Überlagerungsgetriebe.

Für den erfindungsgemäßen Wirkungsmechanismus der Drehzahlregelung kann eine Kombination mit bestehenden Regelungs- und Steuermöglichkeiten, z. B. der Einstellung des Rotorblattwinkels und der Drehzahlregelung im Überlagerungsgetriebe, umgesetzt werden. Dabei wird der Rotor der Windkraftanlage immer auf seiner optimalen Kennlinie gefahren (optimaler Wirkungsgrad) und eine konstante Drehzahl an den Generator abgegeben.

Die Erfindung ist anhand der Zeichnungen näher erläutert. Darin ist im Einzelnen Folgendes dargestellt:

Fig. 1 ist eine schematische Darstellung einer erfindungsgemäßen leistungsverzweigten Windkraftanlage mit einem hydrodynamischen Stellwandler als hydrodynamischen Kreislauf.

Fig. 2 zeigt eine Grafik, die die Drehmoment- und Leistungsaufnahmecharakteristik eines Windrotors in Abhängigkeit von Windgeschwindigkeit und Windrotordrehzahl und die damit verbundene variable Eingangsdrehzahl des erfindungsgemäßen Antriebsstrangs sowie die konstante Ausgangsdrehzahl zum Generator veranschaulicht.

Fig. 3 stellt die Leistungsflüsse und Drehzahlen der einzelnen Zweige des mechanisch-hydrodynamischen Antriebsstrangs in Abhängigkeit der Windturbinendrehzahl dar.

Fig. 4 stellt die Leistungsflüsse und die Einstellung des Reaktionsglieds des mechanisch-hydrodynamischen Antriebsstrangs in Abhängigkeit der Windturbinendrehzahl dar.

Fig. 5a-c stellen Ausführungsbeispiele für den erfindungsgemäßen Antriebsstrang dar, bei denen durch einen hydrodynamischen Kreislauf eine Verbindung zwischen einem ersten und einem zweiten Leistungszweig besteht und Bildleistung über einen zweiten Leistungszweig auf das Leistungsverzweigungsgetriebe zurückgeführt wird.

Fig. 7 zeigt das Windprofil einer erfindungsgemäßen Anlage sowie die zugehörende Rotordrehzahl.

Fig. 8 zeigt schematisch den Wirkieistungsvenauf einer Windkraftanlage mit einem erfindungsgemäßen Antriebsstrang.

Fig. 9 veranschaulicht eine Regelung zur optimalen Leistungsabgabe des Rotors.

Die Rotorleistung $p_R$ einer Windkraftanlage steht näherungsweise im folgenden Zusammenhang zur Windgeschwindigkeit $v_w$:

$$p_R = k\ c_p\left(v_w, \omega_R, \beta\right)\ v_w^3$$

Hierbei werden als *k* verschiedenen Konstanten wie etwa die Blattgeometrie sowie die Dichte der Luft zusammengefasst. Ferner bezeichnet $c_p$ den Leistungsbeiwert, der wiederum, wie dargestellt, von der Windgeschwindigkeit $v_w$ der Rotordrehzahl $\omega_R$ und dem Pitchwinkel $\beta$ abhängt. Dieser Leistungsbeiwert zeichnet sich durch ein globales Maximum aus, welches sich bei steigenden Windgeschwindigkeiten $V_w$ zu größeren Rotordrehzahlen $\omega_R$ hin verschiebt.

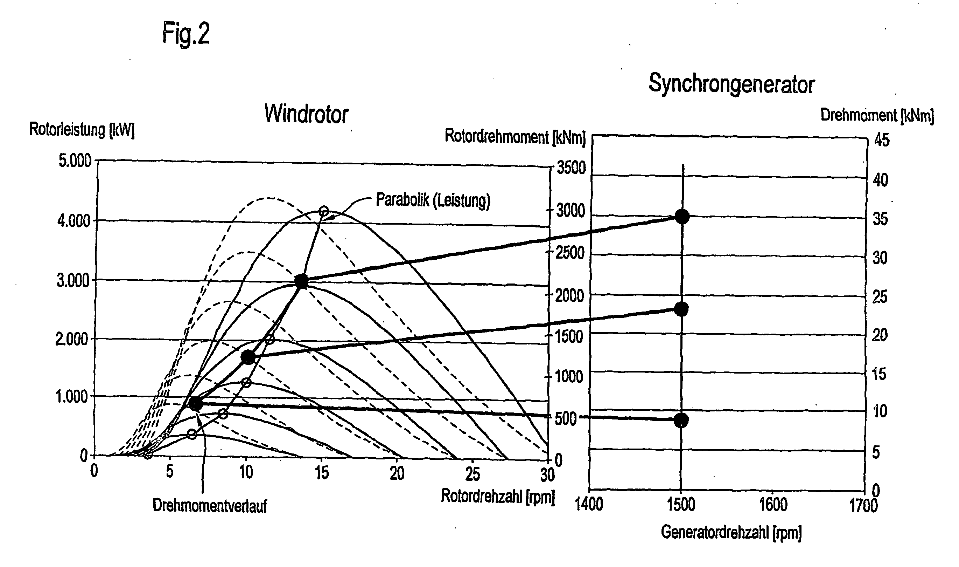

Fig. 2 zeigt diesen Zusammenhang durch die Darstellung von durchgezogenen Kurvenscharen für Wirkleistung des Rotors und von gestrichelten Kurvenscharen für das vom Rotor aufgenommene Drehmoment einer Windkraftanlage unter Berücksichtigung verschiedener Windgeschwindigkeiten, wobei die einzelnen Kurven der Kurvenscharen jeweils exemplarisch einer Windgeschwindigkeit zugeordnet sind. Charakteristisch ist die Verschiebung der optimalen Rotordrehzahl zu höheren Werten mit steigender Windgeschwindigkeit, wobei diese auf einer in Fig. 2 dargestellten Kurve liegen, die als Parabolik bezeichnet wird. Eine drehzahlvariable Anlage kann somit in Abhängigkeit von der zur Verfügung stehenden Windgeschwindigkeit jeweils bei optimalen Leistungsbeiwerten betrieben werden.

Typischerweise sind Windkraflanlagen für bestimmte Nennleistungen, verbunden mit einer Nenndrehzahl, ausgelegt. Bei einer Windleistung oberhalb dieses Schwellwertes findet eine Leistungsbegrenzung entweder durch eine Pitchregelung oder durch Stallregelung statt, so dass für den drehzahlvariablen Betrieb einer Windkraftanlage insbesondere der Teillastbetrieb von Bedeutung ist.

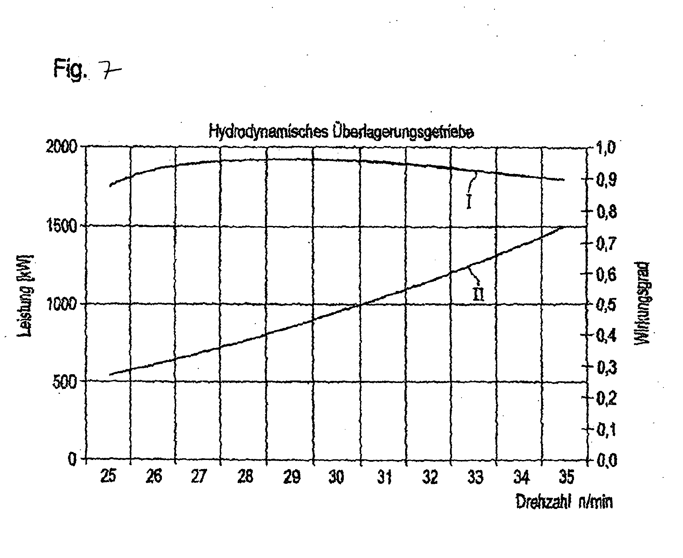

Der erfindungsgemäße Antriebsstrang weist bei der Übertragung über den gesamten Drehzahlbereich einen sehr guten Wirkungsgrad auf, wobei auf das in Fig. 7 dargestellte Auslegungsbeispiel verwiesen wird, bei dem bis zu einer maximalen Übertragungsleistung von 2,5 MW mit einem Antriebsdrehzahlbereich von n = 10 -18 U/min bei konstanter Abtriebsdrehzahl von n = 1500 U/min gerechnet wurde. Kurve I aus Fig. 7 zeigt den gleichmäßig hohen Wirkungsgrad und mit der Kurve II ist die für dieses Beispiel übertragene Leistung skizziert.

Für Windkraftanlagen sind mit einem erfindungsgemäßen Antriebsstrang folgende Regelungsaufgaben bzw. Betriebszustände in Abhängigkeit des Windes in Betracht zu ziehen:

- An- und Abschaltung,
- Bremsen der Rotoren,
- Betrieb mit wechselnden Windgeschwindigkeiten und
- Betrieb mit konstanten Windgeschwindigkeiten um einen optimalen Betriebspunkt.

Eine drehzahlvariable Windkraftanlage kann vorteilhafterweise mit einem erfindungsgemäßen Antriebsstrang zum Übertragen einer variablen Leistung mit einer variablen Eingangsdrehzahl und konstanter Ausgangsdrehzahl, die wiederum auf einen Generator übertragen wird, ausgebildet sein.

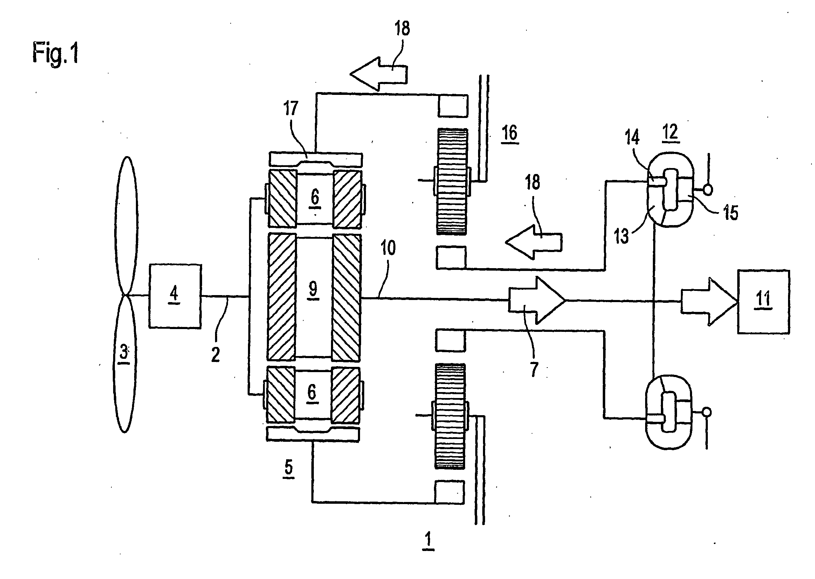

Fig. 1 zeigt hierzu in schematisch vereinfachter Art und Weise einen solchen erfindungsgemäßen Antriebsstrang 1. Dieser umfasst eine Eingangswelle 2, die mit dem Rotor 3 einer Windkraftmaschine wenigstens mittelbar verbunden ist. Im vorliegenden Fall ist ein Getriebe 4 mit einem konstanten Übersetzungsverhältnis zwischen dem Rotor 3 der Windkraftmaschine und der Eingangswelle 2 platziert. Ein solches zwischengeschaltetes Getriebe 4 ist vorteilhaft, jedoch nicht zwingend notwendig, es kann, je nach Anwendungsfall, dazu dienen, den Bereich möglicher Rotordrehzahlen zu erweitern und den Wirkungsgrad optimal zu gestalten.

Der erfindungsgemäße Antriebsstrang weist ein Überlagerungsgetriebe zur Leistungsverzweigung auf, das im Folgenden als Leistungsverzweigungsgetriebe 5 bezeichnet wird. Im hier dargestellten Ausführungsbeispiel wird als Leistungsverzweigungsgetriebe 5 des Antriebsstrangs 1 ein Planetenradgetriebe verwendet, wobei die Eingangswelle 2 mit dem Planetenradträger 6 in Verbindung steht. Im Leistungsverzweigungsgetriebe 5 liegen nun zwei Leistungszweige vor, der erste Leistungszweig 7 führt Leistung über das Sonnenrad 9 zur Ausgangswelle 10 des Antriebsstrangs. Diese Ausgangswelle 10 treibt wenigstens mittelbar den elektrischen Generator 11 an und steht in Wirkverbindung mit dem hydrodynamischen Stellwandler, der im vorliegenden Ausführungsbeispiel als hydrodynamischer Kreislauf 12 dient. Hierzu ist die Ausgangswelle 10 wenigstens mittelbar mit dem Pumpenrad 13 des hydrodynamischen Stellwandlers verbunden.

Vorteilhafterweise handelt es sich bei der Ausgangswelle 10 um eine schnell umlaufende Welle. In der vorliegenden Anmeldung wird unter einer schnell umlaufenden Welle eine solche verstanden, deren Drehzahl ein Vielfaches der Drehzahl der Eingangswelle 2 ist. Besonders bevorzugt wird eine typische Umlaufdrehzahl der Ausgangswelle 10, die zum direkten Betreiben des elektrischen Generators 11 geeignet ist, beispielsweise 1500 U/min. Auch andere Drehzahlwerte für die Ausgangswelle 10 sind je nach Polzahl des elektrischen Generators 11 bzw. der vorliegenden Netzfrequenz denkbar. Vorteilhaft an der Ausbildung einer schnell umlaufenden Ausgangswelle 10 ist, dass der hydrodynamische Kreislauf 12, hier der hydrodynamischen Stellwandler, der wenigstens mittelbar mit der Ausgangswelle 10 in Wirkverbindung steht, effizient, d. h. mit hoher Drehzahl betrieben werden kann.

Als Reaktionsglied 15 wird im hydrodynamischen Wandler ein Leitrad mit Stellschaufeln verwendet, mit dem die Aufnahmeleistung der Pumpe und somit der Leistungsfluss auf das Turbinenrad 14 eingestellt werden kann. Über das Turbinenrad 14 erfolgt wiederum ein Leistungsrückfluss mit Leistungswandlung auf das Hohlrad 17, der über einen zweiten, als Standgetriebe ausgebildeten Planetenradsatz 16 übersetzt wird. Dieser zusätzliche Planetenradsatz 16 ist optional, er wird jedoch bevorzugt, da durch dieses Maßnahme eine Drehzahlerhöhung auf der Ausgangswelle 10, der vorzugsweise schnell umlaufenden Welle, und eine Erhöhung der Relativdrehzahl von Pumpen- 13 und Turbinenrad 14 im hydrodynamischen Kreislauf 12 erreicht wird. Hieraus ergibt sich insbesondere die Möglichkeit den hydrodynamischen Kreislauf 12 kleinbauend auszubilden.

Der variable Leistungsrückfluss auf das Hohlrad 17 des Leistungsverzweigungsgetriebes 5 bewirkt ein variabel einstellbareres Übersetzungsverhältnis. Dies stellt den zweiten Leistungszweig 18 des Leistungsverzweigungsgetriebes dar, der im vorliegenden Ausführungsbeispiel dem Leistungsrückfluss dient. Hierbei ist der Planetenradsatz 16 als optional anzusehen. Er dient im vorliegenden Ausführungsbeispiel eines erfindungsgemäßen Antriebsstrangs zur Herabsetzung der Turbinendrehzahl mit der der hydrodynamische Stellwandler betrieben werden kann. Höhere Pumpen- und Turbinendrehzahlen bewirken Effizienzsteigerung bzw. ergeben die Möglichkeit den hydrodynamischen Stellwandler kleinbauend auszubilden.

Der erfindungsgemäße Antriebsstrang mit einem hydrodynamischen Stellwandler als hydrodynamischen Kreislauf 12 ist nun so konstruktiv ausgestaltet, dass durch die Wahl der mechanischen Übersetzungen im Leistungsverzweigungsgetriebe sowie durch die Dimensionierung des hydrodynamischen Stellwandlers die parabolische Kennlinie der optimalen Leistungsaufnahme durch den Windrotor 3 nachgebildet wird. Ausgangspunkt hierfür ist, dass für jede Windgeschwindigkeit eine ideale Rotordrehzahl für die maximale Leistungsaufnahme aus der Luftströmung angegeben werden kann. Hierzu wird auf die voranstehende Darlegung zur Fig. 2 verwiesen. Als weitere Bedingung ist gleichzeitig eine im Wesentlichen konstante Ausgangsdrehzahl des Antriebsstrangs für den elektrischen Generator vorgegeben.

Im vorliegenden Fall liegt diese bei 1500 U/min mit einer Netzfrequenz von f = 50 Hz. Die notwendigen Umlaufgeschwindigkeiten der Getriebekomponenten des Leistungsverzweigungsgetriebes, etwa des Hohlrades 17 und des Sonnenrades 9, können nun unter Beachtung dieser Vorgaben für jede Windgeschwindigkeit im Teillastbereich festgelegt werden. Hierzu ist zu beachten, dass der Antriebsstrang die parabolische Leistungsaufnahmecharakteristik für eine im Wesentlichen konstant bleibende Stellung des Reaktionsglieds 15 des hydrodynamischen Stellwandlers 12 nachbilden muss.

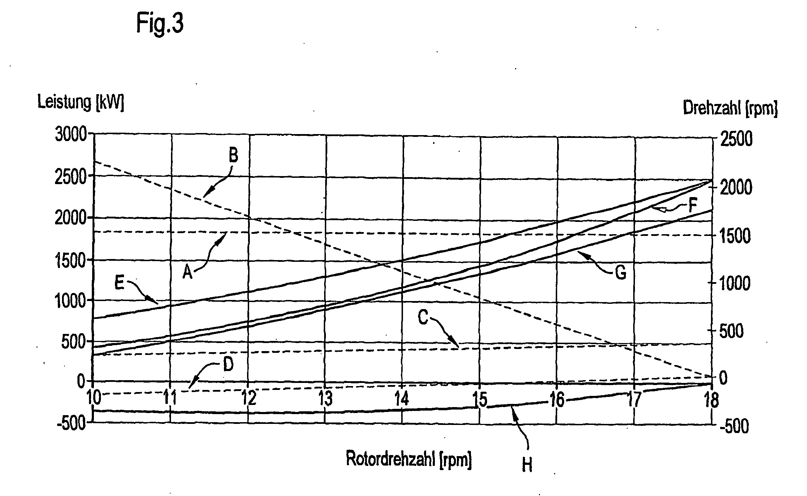

Fig. 3 stellt an Hand einer Ausgestaltung des Ausführungsbeispiels gemäß Fig. 1 die sich am Antriebsstrang einstellenden Drehzahlen sowie die in den einzelnen Zweigen übertragenden Leistungen dar. Im Einzelnen zeigt die Kurve A die Drehzahl der Abtriebswelle 10, Kurve B die Drehzahl des Turbinenrads 14 des hydrodynamischen Stellwandlers, Kurve C die Drehzahl der Eingangswelle 2 und die Kurve D die Drehzahl auf dem Hohlrad 17 des Leistungsverzweigungsgetriebes 5. Für die Leistungsflüsse stellt die Kurve F die vom Windrotor aufgenommene Leistung dar, Kurve E ist die Leistung auf dem Sonnenrad 9 des hydrodynamischen Stellwandlers 12, Kurve G die vom Antriebsstrang übertragene Leistung zum elektrischen Generator und Kurve H gibt die über den zweiten Leistungszweig 18 vom hydrodynamischen Stellwandler auf das Leistverzweigungsgetriebe 5 zurückfließende Leistung.

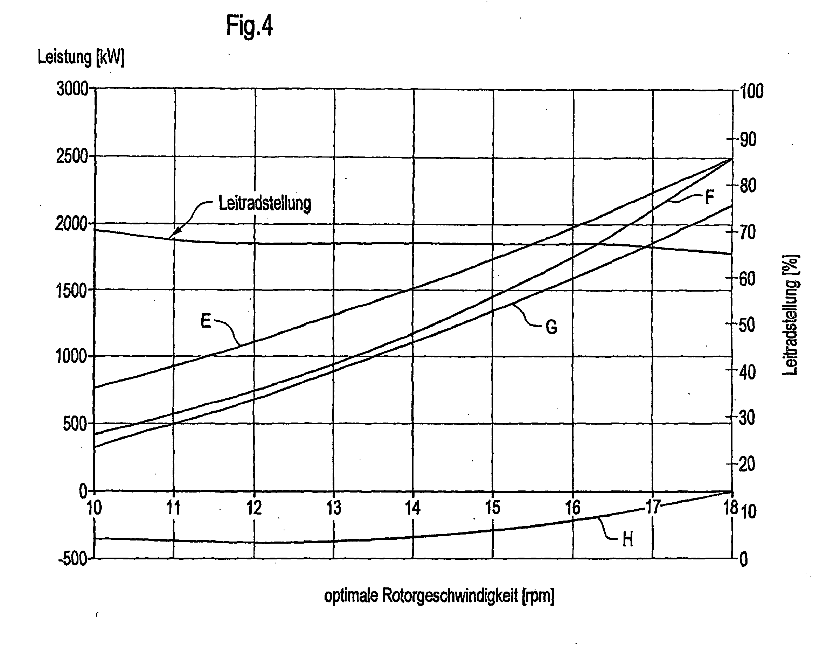

Fig. 4 zeigt nochmals den Leistungsfluss für das Ausführungsbeispiel gemäß Fig. 1 sowie die Einstellung des Reaktionsglieds 15 des hydrodynamischen Stellwandlers, im vorliegenden Fall des Leitrads. Die Leistungsflusskurven E, F, G und H entsprechen jenen aus Fig. 3. Sichtbar ist, dass bei einer optimalen Leistungsaufnahme entlang der Parabolik, die durch die Charakteristik des Antriebsstrangs nachgebildet werden kann, mit einer über den gesamten dargestellten Teillastbereich mit einer im Wesentlichen gleich bleibenden Leitschaufelstellung gearbeitet werden kann. Diese Einstellung wird nachfolgend als die justierte Einstellung des hydrodynamischen Wandlers bezeichnet. Es ist also keine Regelung des Reaktionsglieds im eigentlichen Sinne nötig, um die Konstanz der Ausgangsdrehzahl des Antriebsstrangs zur Beschickung des elektrischen Generators bei gleichzeitiger variabler optimaler Windrotordrehzahl zu erreichen. Hierbei wird darauf verwiesen, dass die Steilheit der die Leistungsaufnahme charakterisierenden Parabel durch die Übersetzungsdimensionierung der Komponenten des Leistungsverzweigungsgetriebes wie durch die Dimensionierung des hydrodynamischen Stellwandlers eingestellt werden kann. Diese Charakteristik des erfindungsgemäßen Antriebsstrangs wird in der vorliegenden Anmeldung als Selbstregelung bezeichnet

Verallgemeinert zeigt Fig. 1 einen leistungsverzweigten Antriebsstrang, welcher einen hydrodynamischen Kreislauf 12 aufweist, der Leistung aus dem Hauptstrang mit dem der elektrische Generator 11 angetrieben wird abzweigt bzw. rückwirkend auf das Leistungsverzweigungsgetriebe 5 überträgt. Auch ist es denkbar, den Antriebsstrang so zu konstruieren, dass vom Leistungsverzweigungsgetriebe 5 über den hydrodynamischen Stellwandler auf den ersten Leistungszweig 7 eine Teilleistung eingeleitet wird. Hierbei ist es möglich, als hydrodynamischen Kreislauf 12 einen hydrodynamischen Stellwandler oder einen Trilocwandler einzusetzen. Wie voranstehend dargestellt, besteht bei der Verwendung eines hydrodynamischen Stellwandlers der Vorteil einer Selbstregelung aufgrund der Übereinstimmung zwischen der Leistungsaufnahmecharakteristik eines Windrotors und der Eigencharakteristik des hydrodynamischen Stellwandlers. Im Gegensatz hierzu muss bei der Wahl einer hydrodynamischen Kupplung als hydrodynamischer Kreislauf 12 der Leistungsfluss zwischen den Kupplungshälften aktiv geregelt werden. Der Trilocwandler wiederum kann in bestimmten Betriebsbereichen wegen seiner hohen Effizienz als alternativer hydrodynamischer Kreislauf 12 bevorzugt werden.

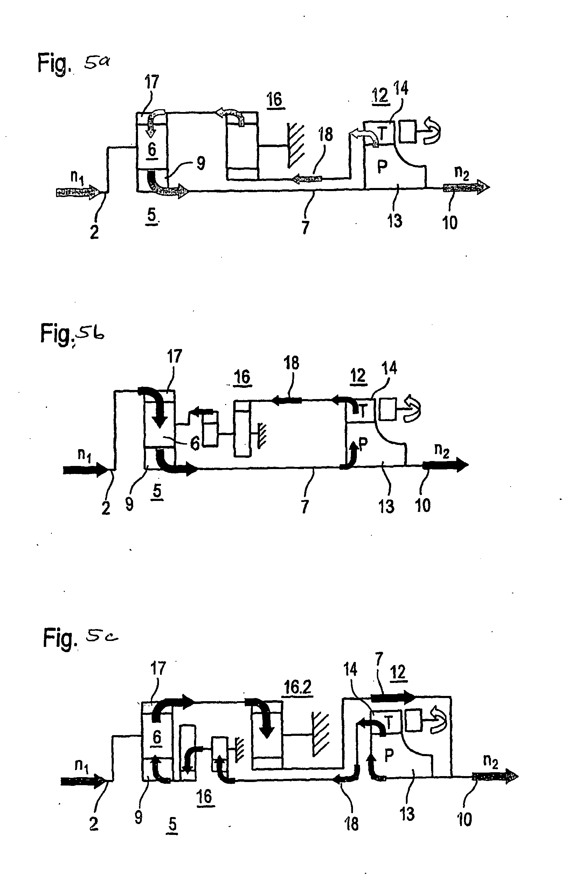

Im Rahmen des fachmännischen Könnens ist es möglich, den erfindungsgemäßen Antriebsstrang unterschiedlich auszugestalten. Hierbei wird im Folgenden zwischen zwei erfindungsgemäßen Varianten des Leistungsflusses unterschieden, was anhand von Beispielen in den Fig. 5a, 5b, 5c, dargestellt ist. Die Bezugszeichen für übereinstimmende Komponenten des Antriebsstrangs sind entsprechend zu Fig. 1 gewählt.

Das Leistungsflussschema aus Fig. 5a entspricht jenem aus Fig. 1, wobei durch das Leistungsverzweigungsgetriebe 5 die über die Eingangswelle 2 eingebrachte Leistung, hier bei der Drehzahl $n_1$, auf einen ersten Leistungszweig 7, der wenigstens mittelbar einen elektrischen Generator antreibt und die konstante Ausgangsdrehzahl $n_2$ aufweist, und einen zweiten Leistungszweig 18 aufgeteilt wird.

Kennzeichnend für die in den Fig. 5a, 5b, 5c gezeigte erste Ausgestaltungsvariante ist, dass über den zweiten Leistungszweig 18 Leistung in Form von Blindleistung auf das Leistungsverzweigungsgetriebe 5 zurückfließt. Bevorzugt ist auch die übereinstimmende Verbindung des ersten und des zweiten Leistungszweigs 7, 18 über den hydrodynamischen Kreislauf 12, wobei bevorzugt das Pumpenrad 13 wenigstens mittelbar mit dem ersten Leistungszweig 7 und das Turbinenrad 14 wenigstens mittelbar mit dem zweiten Leistungszweig 18 verbunden sind.

Die in den Fig. 5a, 5b, 5c skizzierten Ausgestaltungsunterschiede ergeben sich aus der Art der Leistungsverzweigung im Leistungsverzweigungsgetriebe 5. Nach Fig. 5a erfolgt die Leistungseinleitung über den Planetenradträger 6, der erste Leistungszweig 7 steht in Wirkverbindung mit dem Sonnenrad 9 und der zweite Leistungszweig 18 ergibt eine Rückwirkung auf das Hohlrad 17. Nach Fig. 5b erfolgt die Leistungseinleitung über das Hohlrad 17, der erste Leistungszweig 7 steht wiederum in Wirkverbindung mit dem Sonnenrad 9 und der zweite Leistungszweig 18 ist wenigstens mittelbar mit dem Planetenradträger 6 verkoppelt. Gemäß Fig.5c kann bei einer Leistungseinleitung über den Planetenradträger 6 der erste Leistungszweig 7 in Wirkverbindung mit dem Hohlrad 17 und der zweite Leistungszweig 18 in Wirkverbindung mit dem Sonnenrad 9 treten. Ferner ist es möglich, zusätzliche Getriebe als Standgetriebe in den Leistungszweigen zwischenzuschalten, diese sind iri den Ausführungsbeispielen als Planetenradgetriebe skizziert und mit den Bezugszeichen 16 und 16.2 versehen.

Kennzeichnend für einen hydrodynamischen Kreislauf 12 in der erfindungsgemäßen Kombination mit einem Leistungsverzweigungsgetriebe 5 ist eine gewisse Weichheit in der Reaktivität. Darunter wird eine hinreichende Dämpfung ohne Leistungsverluste für ein vorteilhaftes Regelungsverhalten ausgenutzt, welche aus den bewegten Massen des hydrodynamischen Kreislaufs 12 resultiert. Insbesondere kurzzeitige Schwankungen im System, wie sie bei Windkraftanlagen durch Abschattungseffekte oder bei Böen auftreten, können durch das erfindungsgemäße System somit gut abgefedert werden, was einen wesentlichen Vorteil aus regelungstechnischer Sicht bei der Konstanthaltung der Abtriebsdrehzahl des erfindungsgemäßen Antriebsstrangs darstellt.

Weiterhin kennzeichnend für die erfindungsgemäße Anordnung ist, dass sich durch die Verwendung von wenigstens einem hydrodynamischen Kreislauf 12, welcher auf das Leistungsverzweigungsgetriebe 5 zurückwirkt, eine Energiespeicherwirkung, zumindest eine kurzzeitige, realisieren lässt. Auch diese wirkt sich vorteilhaft für die Regelungscharakteristik des erfindungsgemäßen Antriebsstrangs aus.

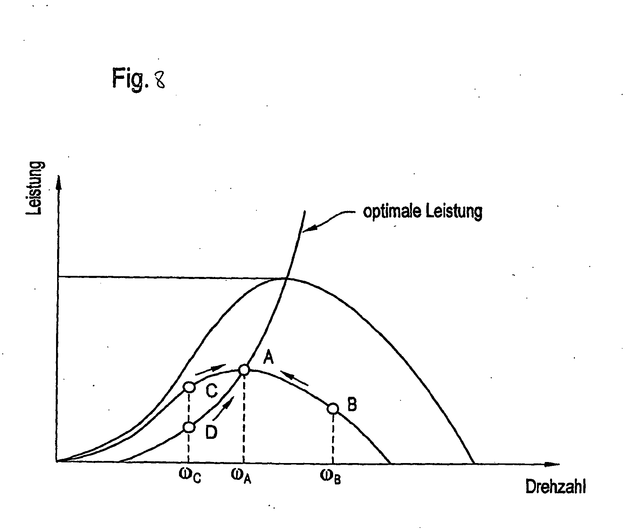

Fig. 8 illustriert wiederum am Beispiel einer Windkraftanlage die flexible Anpassung einer Eingangsdrehzahl eines Antriebsstrangs und somit eine optimal an den Wind angepasste Rotordrehzahl, wobei gleichzeitig von einer konstanten Abtriebsdrehzahl (Generatordrehzahl) ausgegangen wird. Dargestellt sind unterschiedliche Betriebspunkte A, B und C, welche verschiedenen Leistungsbeiwerten mit den zugeordneten Rotordrehzahlen $\omega_C$, $\omega_A$) und $\omega_B$ entsprechen. Bei Punkt A entnimmt der Rotor der Luftströmung eine optimale Leistung. In Punkt C wird nur ein Teil der möglichen Rotorleistung ausgenutzt und der hydrodynamische Kreislauf wird folglich in der Leistungsaufnahme vom Hauptstrang und der abgegebenen Leistung in der Rückführung zum Überlagerungsgetriebe so geregelt, dass der Rotor beschleunigt wird bis er den optimalen Arbeitspunkt A erreicht. Mit einem entgegengesetzten Vorzeichen findet die Regelung ausgehend vom Betriebspunkt B aus statt. Dies entspricht somit der Regelung in einem optimalen Arbeitspunkt bei konstant angenommener Windgeschwindigkeit.

Ferner ist es auch möglich, dass eine gewisse Fluktuation im Wind auftritt, wodurch sich der konstante Arbeitspunkt verschiebt. Ein Beispiel hierfür ist der Punkt D, der ebenfalls wie der Punkt A auf der Kurve optimaler Leistung liegt und einer geringeren Windgeschwindigkeit entspricht. Somit ist durch den erfindungsgemäßen Antriebsstrang auch eine zeitlich variable Eingangsleistung mit zeitlicher Variabilität in der Eingangsdrehzahl einstellbar bzw. regelbar.

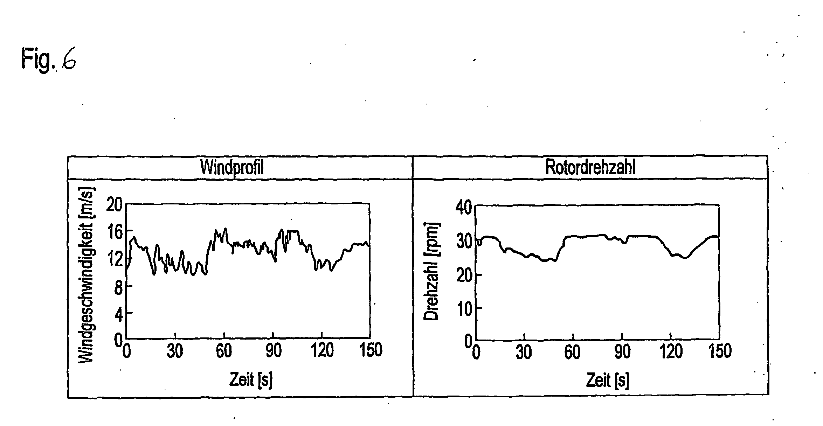

Fig. 6 zeigt hierzu illustrierend ein Windprofil mit zeitlich flukturierender Windgeschwindigkeit, welche wiederum in eine optimale Rotordrehzahl umgesetzt wird. Hierbei findet eine gewisse Glättung aufgrund der Trägheit der verwendeten mechanischen Komponenten Rotor, Getriebe, hydrodynamischer Kreislauf etc. statt.

Im Allgemeinen wird im Rahmen der erfindungsgemäßen Idee, einen Antriebsstrang mit konstanter Ausgangsdrehzahl zu schaffen, auch eine solche Anordnung verstanden, welche die Ausgangsdrehzahl mit einer gewissen Genauigkeit konstant hält. Gewisse Abweichungen sind hierbei tolerierbar. Abweichungen können hierbei beispielsweise im Bereich $\pm$ 10 %, bevorzugt $\pm$ 5 % und besonders bevorzugt $\pm$ 1 % der Sollausgangsdrehzahl liegen. Beim Einsatz in Windkraftanlagen bei stark mit dem Verteilernetz gekoppelten Generatoren wird jedoch eine besonders hohe Konstanz der Abtriebsdrehzahl von maximal $\pm$ 0,5 % bevorzugt, die das zu betreibende Netz weiterführend unterstützt.

Weitere Anwendungsmöglichkeiten eines erfindungsgemäßen Antriebsstrangs über die Windkraft hinaus ergeben sich beispielsweise bei speziellen Wasserkraftwerken, in denen Turbinen eingesetzt werden, die nicht mit konstanter Drehzahl betrieben werden können. Solche Bedingungen können beispielsweise in Strömungs- und Gezeiten-Kraftwerken oder bei Spezialanordnungen in Schleusensystemen gegeben sein. Außerdem ist es denkbar, mit dem erfindungsgemäßen Prinzip natürliche und somit zeitlich variable Energiequellen, etwa die Wellenkraft, auf einen elektrischen Generator zu übertragen, der eine konstante Eingangsdrehzahl verlangt.

**Patentansprüche**

1.  Antriebsstrang zum Übertragen einer variablen Leistung mit variabler Eingangsdrehzahl für eine Energieerzeugungsanlage angetrieben durch eine Strömungsmaschine wie eine Windturbine (3) oder eine Wasserturbine;

    1.1 mit einem Leistungsverzweigungsgetriebe (5) zur Aufteilung der Leistung auf wenigstens einen ersten Leistungszweig (7) und wenigstens einen zweiten Leistungszweig (18);
    1.2 der erste Leistungszweig (7) treibt wenigstens mittelbar einen elektrischen Generator (11) an;
    1.3 mittels eines, abtriebsseitig zum Leistungsverzweigungsgetriebe (5) angeordneten hydraulischen Kreislaufs (12) wird eine Verbindung zwischen dem ersten Leistungszweig (7) und dem zweiten Leistungszweig (18) hergestellt und durch den hydraulischen Kreislauf (12) der Leistungsfluss so beeinflusst, dass die Drehzahl, mit welcher der elektrische Generator (11) angetrieben wird, im Wesentlichen konstant ist;
    **dadurch gekennzeichnet, dass**
    1.4 der hydraulische Kreislauf ein hydrodynamischer Stellwandler oder ein Trilocwandler ist.

**2.** Antriebsstrang zum Übertragen einer variablen Leistung mit variabler Eingangsdrehzahl nach Anspruch 1 **dadurch gekennzeichnet, dass** der hydrodynamische Stellwandler (12) oder der Trilocwandler ein Pumpenrad (13) umfasst, das auf einer schnell umlaufenden Welle des Leistungsverzweigungsgetriebes (5) angeordnet ist und die schnell umlaufende Welle eine Ausgangswelle (10) des Antriebsstrangs ist, mit welcher der elektrische Generator (11) wenigstens mittelbar verbunden ist.

**3.** Antriebsstrang zum Übertragen einer variablen Leistung mit variabler Eingangsdrehzahl nach wenigstens einem der Ansprüche 1 oder 2, **dadurch gekennzeichnet, dass** dem Leistungsverzweigungsgetriebe (5) ein weiteres Getriebe (4) vorgeschaltet oder nachgeschaltet ist.

**4.** Antriebsstrang zum Übertragen einer variablen Leistung mit variabler Eingangsdrehzahl nach wenigstens einem der Ansprüche 1 - 3, **dadurch gekennzeichnet, dass** im zweiten Leistungszweig (18) ein zusätzliches Getriebe (16, 16.2) angeordnet ist, um die Drehzahl, mit der der hydrodynamische Kreislauf (12) betrieben wird, zu erhöhen.

**5.** Verfahren zum Betrieb eines Antriebsstrangs zum Übertragen einer variablen Leistung mit variabler Eingangsdrehzahl für eine Energieerzeugungsanlage, angetrieben durch eine Strömungsmaschine wie eine Windturbine (3) oder eine Wasserturbine;

5.1 mit einem Leistungsverzweigungsgetriebe (5) zur Aufteilung der Leistung auf wenigstens einen ersten Leistungszweig (7) und einen zweiten Leistungszweig (18), wobei der erste Leistungszweig (7) wenigstens mittelbar einen elektrischen Generator (11) antreibt, und

5.2 wobei mittels eines abtriebsseitig zum Leistungsverzweigungsgetriebe (5) angeordneten hydrodynamischen Kreislaufs (12) in Form eines hydrodynamischen Stellwandlers oder eines Trilocwandlers eine Verbindung zwischen dem ersten Leistungszweig (7) und dem Leistungszweig (18) hergestellt ist, wobei der hydrodynamische Kreislauf (12) ein Reaktionsglied (15) umfasst,

umfassend den Verfahrensschritt,

5.3 dass beim Betrieb der Strömungsmaschine im Teillastbereich für das Reaktionsglied (15) eine vorbestimmte Einstellung beibehalten wird, die den Leistungsfluss im Leistungsverzweigungsgetriebe (5) so beeinflusst, dass die Drehzahl, mit welcher der elektrische Generator (11) betrieben wird, im Wesentlichen konstant ist.

**Claims**

**1.** A drive train for transmitting variable power with variable input speed for a power generation plant, driven by a continuous-flow machine such as a wind turbine (3) or a water turbine;

1.1 with a power-splitting transmission (5) for splitting the power among at least one first power branch (7) and at least one second power branch (18);

1.2 the first power branch (7) drives an electric generator (11) at least indirectly;

1.3 a connection is produced between the first power branch (7) and the second power branch (18) by means of a hydraulic circuit (12) arranged on the output side to the power-splitting transmission (5) and the power flow is influenced by the hydraulic circuit (12) in such a way that the speed with which the electric generator (11) is driven is substantially constant; **characterized in that**

1.4 the hydraulic circuit is a hydrodynamic servo converter or TRILOK torque converter.

**2.** A drive train for transmitting a variable power with variable input speed according to claim 1, **characterized in that** the hydrodynamic servo converter (12) or the TRILOK torque converter (13) comprises a pump wheel which is arranged on a rapidly revolving shaft of the power-splitting transmission (5), and the rapidly revolving shaft is an output shaft (10) of the drive train with which the electric generator (11) is connected at least indirectly.

**3.** A drive train for transmitting a variable power with variable input speed according to at least one of the claims 1 or 2, **characterized in that** a further transmission (4) is connected upstream or downstream of the power-splitting transmission (5).

**4.** A drive train for transmitting a variable power with variable input speed according to at least one of the claims 1 to 3, **characterized in that** an additional transmission (16, 16.2) is arranged in the second power branch (18) in order to increase speed with which the hydrodynamic circuit (12) is operated.

**5.** A method for operating a drive train for transmitting a variable power with variable input speed for a power generation plant, driven by a continuous-flow machine such as a wind turbine (3) or a water turbine;

> 5.1 with a power-splitting transmission (5) for splitting the power among at least one first power branch (7) and a second power branch (18), with the first power branch (7) driving an electric generator (11) at least indirectly, and
> 5.2 with a connection being produced between the first power branch (7) and the power branch (18) by means of a hydrodynamic circuit (12) in the form of a hydrodynamic servo converter or TRILOK torque converter which is arranged on the output side to the power-splitting transmission (5), with the hydrodynamic circuit (12) comprising a reaction member (15), comprising the method step
> 5.3 that during the operation of the continuous-flow machine in the part-load range a predetermined setting is maintained for the reaction member (15) which influences the power flow in the power-splitting transmission (5) in such a way that the speed with which the electric generator (11) is driven is substantially constant.

**Revendications**

**1.** Chaîne cinématique pour la transmission d'une puissance variable avec un nombre de tours d'entrée variable pour une installation de production d'énergie entraînée par une turbomachine comme une turbine éolienne (3) ou une turbine hydraulique ;

> 1.1 avec une transmission de dérivation de puissance (5) pour la division de la puissance sur au moins une première branche de puissance (7) et au moins une deuxième branche de puissance (18);
> 1.2 la première branche de puissance (7) entraîne au moins indirectement un générateur électrique (11) ;
> 1.3 au moyen d'un circuit hydraulique (12) placé côté sortie de la transmission de dérivation de puissance (5), une connexion entre la première branche de puissance (7) et la deuxième branche de puissance (18) est établie et par le circuit hydraulique (12), le flux de puissance est influencé de telle manière que le nombre de tours, avec lequel le générateur électrique (11) est entraîné, est essentiellement constant ;
> **caractérisée en ce que**,
> 1.4 le circuit hydraulique est un convertisseur de réglage hydrodynamique ou un convertisseur Trilok.

**2.** Chaîne cinématique pour la transmission d'une puissance variable avec un nombre de tours d'entrée variable selon revendication 1, **caractérisé en ce que** le convertisseur de réglage hydrodynamique (12) ou le convertisseur Trilok comprend une roue de pompe (13), qui est placée sur un axe à rotation rapide de la transmission de dérivation de puissance (5) et l'axe à rotation rapide est un axe de sortie (10) de la chaîne cinématique, avec laquelle générateur électrique (11) est relié au moins indirectement.

**3.** Chaîne cinématique pour la transmission d'une puissance variable avec un nombre de tours variable selon au moins l'une des revendications 1 ou 2, **caractérisé en ce qu'**une autre transmission (4) est connectée en amont ou en aval de la transmission de dérivation de puissance (5).

**4.** Chaîne cinématique pour la transmission d'une puissance variable avec un nombre de tours variable selon au moins l'une des revendications 1 - 3, **caractérisée en ce que** dans la deuxième branche de puissance (18) une transmission additionnelle (16, 16.2) est placée, pour augmenter le nombre de tours, avec lesquels le circuit hydrodynamique (12) est exploité.

**5.** Procédé pour le fonctionnement d'une chaîne cinématique pour la transmission d'une puissance variable avec un nombre de tours variable pour une installation de production d'énergie, entraîné par une turbomachine comme une turbine éolienne (3) ou une turbine hydraulique ;

> 5.1 avec une transmission de dérivation de puissance (5) pour la division de la puissance sur au moins une première branche de puissance (7) et une deuxième branche de puissance (18) sachant que la première branche de puissance (7) entraîne un générateur électrique (11) au moins indirectement et
> 5.2 sachant qu'au moyen d'un circuit hydrodynamique placé côté sortie de la transmission de dérivation de puissance (5) sous la forme d'un convertisseur de réglage hydrodynamique ou convertisseur Trilok, une connexion est établie entre la première branche de puissance (7) et la branche de puissance (18) sachant que le circuit hydrodynamique (12) comprend une liaison de réaction (15).
> comprenant l'étape de procédé,
> 5.3 que lors du fonctionnement de la turbomachine dans la zone de charge partielle pour la liaison de réaction (15), un réglage prédéterminé est maintenu, qui a une influence sur le flux de puissance dans la transmission de dérivation de puissance (5) de telle manière que le nombre de tours, avec lequel le générateur électrique (11) est exploité, est essentiellement constant.

Fig.1

# Fig.2

Windrotor — Rotorleistung [kW], Rotordrehmoment [kNm], Rotordrehzahl [rpm]

Parabolik (Leistung)

Drehmomentverlauf

Synchrongenerator — Drehmoment [kNm], Generatordrehzahl [rpm]

EP 1 608 872 B1

Fig.3

## Fig.4

Leistung [kW]

optimale Rotorgeschwindigkeit [rpm]

Leitradstellung [%]

Leitradstellung

E

F

G

H

EP 1 608 872 B1

Fig. 5a

Fig. 5b

Fig. 5c

Fig. 6

Fig. 7

**Hydrodynamisches Überlagerungsgetriebe**

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8101444 A

- EP 0120654 A1